(19) **Europäisches Patentamt European Patent Office Office européen des brevets**

(11) **EP 4 574 534 A1**

(12) **EUROPEAN PATENT APPLICATION**
published in accordance with Art. 153(4) EPC

(43) Date of publication:
**25.06.2025 Bulletin 2025/26**

(21) Application number: **23854749.1**

(22) Date of filing: **11.07.2023**

(51) International Patent Classification (IPC):
**B60L 15/20** (2006.01)   **B60L 9/18** (2006.01)
**B60W 30/188** (2012.01)

(52) Cooperative Patent Classification (CPC):
**B60L 9/18; B60L 15/20; B60W 30/188**

(86) International application number:
**PCT/JP2023/025525**

(87) International publication number:
**WO 2024/038712 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.08.2022 JP 2022129527**

(71) Applicants:
• **Mitsubishi Jidosha Kogyo Kabushiki Kaisha Tokyo 108-8410 (JP)**
• **The University of Tokyo Bunkyo-ku, Tokyo 113-8654 (JP)**

(72) Inventors:
• **OKAMURA, Yutaro Tokyo 108-8410 (JP)**
• **FUJIMOTO, Hiroshi Tokyo 113-8654 (JP)**
• **FUSE, Hiroyuki Tokyo 113-8654 (JP)**
• **YU, Guangzhi Tokyo 113-8654 (JP)**
• **TAKAHASHI, Naoki Tokyo 108-8410 (JP)**
• **TAKAHASHI, Ryota Tokyo 108-8410 (JP)**
• **MATSUO, Shunsuke Tokyo 108-8410 (JP)**
• **KOGA, Ryosuke Tokyo 108-8410 (JP)**

(74) Representative: **Vossius & Partner Patentanwälte Rechtsanwälte mbB Siebertstrasse 3 81675 München (DE)**

(54) **VEHICLE CONTROL DEVICE AND VEHICLE CONTROL METHOD**

(57) The disclosed vehicle control device (10) controls outputs of a left driving source and a right driving source in a vehicle, and includes a first calculator (21), a second calculator (22), a sum-mode feed-back model, and a difference-mode feed-back model, and a controller (24). The first calculator (21) calculates a first equivalent sum value corresponding to sum of a left target speed and a right target speed. The second calculator (22) calculates a second equivalent sum value corresponding to a sum of a left actual speed and a right actual speed, and a second equivalent difference value corresponding to a difference between the left actual speed and the right actual speed. The controller (24) controls torques of the left driving source and the right driving source, using the feed-back sum instruction torque and the feed-back difference instruction torque.

FIG. 1

**Description**

[Technical Field]

The embodiment discussed herein relates to a vehicle control device and a vehicle control method for control a driving source mounted on a vehicle.

[Background Technique]

Conventionally, for a vehicle provided with multiple driving sources, a method has been known in which an operating state of each driving source is controlled while suppressing vibration of a driving power transmission system by using a vehicle model that models the behavior of the driving power transmission system (see Patent Document 1).

[Prior Art Document]

[Patent Document]

[Patent Document 1] JP 2019-103249 A

[Summary of Invention]

[Problems to be Solved by Invention]

The behavior of the driving power transmission system while the vehicle is running straight is different from the behavior while the vehicle is cornering. For the above, there is need to construct a control to deal with a vehicle while running straight and a control to deal with the vehicle while cornering. Constructing respective controls for the left and right driving systems would result in a complex control configuration. In addition, the traveling state of a vehicle is sometimes a combined state in which a running-straight state and a cornering state are mixed, which makes it difficult to enhance the controllability.

With the foregoing problems in view, one of the objects of the embodiment is to provide a vehicle control device and a vehicle control method that can enhance the controllability with a simple configuration. In addition to this object, actions and effects which are derived from each configuration of "Embodiment to Carry out Invention" to be described below and which conventional technique does not attain are regarded as other objects of the present disclosure.

[Means to Solve Problems of Invention]

The disclosed vehicle control device and vehicle control method I can be achieved in the embodiment and the application to be disclosed below and solve at least some of the above problems.

The provided vehicle control device is for controlling outputs of a left driving source and a right driving source in a vehicle provided with a left driving system and a right driving system, the left driving system including a left axle and a left wheel, the right driving system including a right axle and a right wheel, motion power from the left driving source being transmitted to the left axle and the left wheel, motion power from the right driving source being transmitted to the right axle and the right wheel. The vehicle control device includes: a first calculator that calculates a first equivalent sum value corresponding to sum of a left target speed and a right target speed, and calculates a first equivalent difference value corresponding to a difference between the left target speed and the right target speed, the left target speed being a target speed of the left driving system or the left driving source, the right target speed being a target speed of the right driving system or the right driving source; a second calculator that calculates a second equivalent sum value corresponding to a sum of a left actual speed and a right actual speed, and a second equivalent difference value corresponding to a difference between the left actual speed and the right actual speed, the left actual speed being an actual speed of the left driving system or the left driving source, the right actual speed being an actual speed of the right driving system or the right driving source; a sum-mode feed-back model that models motion states of the left driving system, the right driving system, the left driving source, and the right driving source while the vehicle is running straight, application of the first equivalent sum value and the second equivalent sum value to the sum-mode feed-back model deriving a feed-back sum instruction torque for causing actual speeds of the left driving system and the right driving system or actual speeds of the left driving source and the right driving source to follow the respective target speeds; a difference-mode feed-back model that models motion states of the left driving system, the right driving system, the left driving source, and the right driving source while the vehicle is cornering, application of the first equivalent difference value and the second equivalent difference value to the difference-mode feed-back model deriving a feed-back difference instruction torque for causing the actual speeds to follow the respective target speeds; and a controller that controls torques of the left driving source and the right driving source, using the feed-back sum instruction torque and the feed-back difference instruction torque.

The disclosed vehicle control method is for controlling outputs of a left driving source and a right driving source in a vehicle provided with a left driving system and a right driving system, the left driving system including a left axle and a left wheel, the right driving system including a right axle and a right wheel, motion power from the left driving source being transmitted to the left axle and the left wheel, motion power from the right driving source being transmitted to the right axle and the right wheel. The vehicle control method comprising: preparing a sum-mode feed-back model and a difference-mode feed-back model, the sum-mode feed-back model modeling motion states of the left driving system, the right driving system, the left driving source, and the right driving source while the vehicle is running straight, the difference-mode feed-back model modeling motion states of the left driving system, the right driving system, the left driving source, and the right driving source while the vehicle is cornering; calculating a first equivalent sum value corresponding to sum of a left target speed and a right target speed, and a first equivalent difference value corresponding to a difference between the left target speed and the right target speed, the left target speed being a target speed of the left driving system or the left driving source, the right target speed being a target speed of the right driving system or the right driving source; calculating a second equivalent sum value corresponding to a sum of a left actual speed and a right actual speed, and a second equivalent difference value corresponding to a difference between the left actual speed and the right actual speed, the left actual speed being an actual speed of the left driving system or the left driving source, the right actual speed being an actual speed of the right driving system or the right driving source; obtaining a feed-back sum instruction torque for causing actual speeds of the left driving system and the right driving system or actual speeds of the left driving source and the right driving source to follow the respective target speeds by applying the first equivalent sum value and the second equivalent sum value to the sum-mode feed-back model; obtaining a feed-back difference instruction torque for causing the actual speeds to follow the respective target speeds by applying the first equivalent difference value and the second equivalent difference value to the difference-mode feed-back model; and controlling torques of the left driving source and the right driving source, using the feed-back sum instruction torque and the feed-back difference instruction torque.

[Effect of Invention]

According to the disclosed vehicle control device and vehicle control method, instruction torques that can achieve target speeds can be obtained with a simple configuration by separating a sum model corresponding to a running-straight state of a vehicle and a difference model corresponding to a cornering state of the vehicle from each other, grasping a feed-back sum instruction torque based on a first equivalent sum value and a second equivalent sum value, and grasping a feed-back difference instruction torque based on a first equivalent difference value and a second equivalent difference value. Accordingly, the state (behavior) of a driving system that have a different characteristic between the running-straight state and the cornering state can be precisely grasped and controlled, and also the controllability can be enhanced with a simple configuration so that driving force control that can deal with any running state can be achieved.

[Brief Description of Drawings]

FIG. 1 is a block diagram showing a vehicle applied with a vehicle control device.
FIG. 2 is a skeleton diagram showing an example of a configuration of a driving system of the vehicle.
FIG. 3 is a speed graph of a power distributing mechanism of the vehicle having the configuration of FIG. 2.
FIG. 4 is a block diagram showing a flow of the vehicle control method.
FIG. 5 is a block diagram showing an example of a conversion step of FIG. 4.
FIG. 6 is a block diagram showing an example of an invert-conversion and controlling step of FIG. 4.
FIG. 7 is a block diagram showing an example of a second converting step of FIG. 4.
FIG. 8 is a schematic diagram schematically showing a left driving system and a right driving system of the vehicle.
FIG. 9A is a schematic diagram of a sum model and FIG. 9B is a schematic diagram of a difference model.
FIG. 10 is a schematic diagram for considering the behavior of the vehicle while the vehicle is running straight.
FIG. 11 is a schematic diagram showing a relationship between a torque and a speed while the vehicle is running straight.
FIG. 12 is a schematic diagram showing a relationship between a torque and a speed while the vehicle is cornering.
FIG. 13 is a block diagram showing a flow of the vehicle control method according to a first modification.
FIG. 14 is a graph showing a gap between a motor speed and a wheel speed.
FIG. 15 is a block diagram showing a flow of the vehicle control method according to a second modification.

[Embodiment to Carry out Invention]

Examples of the type of vehicle that uses the disclosed vehicle control device and vehicle control method are an engine vehicle (a gasoline-powered vehicle, a diesel-powered vehicle), an electric vehicle, and a hybrid vehicle. The vehicle is an automobile that travels by driving left and right wheels (left and right driving wheels) using at least one driving source (e.g., an internal combustion engine or a motor), and is preferably an automobile that travels by driving left and right wheels (left and right drive wheels) using multiple driving sources. Here, one of the multiple driving sources is referred to as a left driving source, and another one of the driving sources is referred to as a right driving source. In addition, one of the left and right wheels positioned on the left side of the vehicle is referred to as a left wheel, and the other is referred to as a right wheel. The disclosed vehicle control device and vehicle control method can be used for controlling a vehicle provided with a left driving system including a left axle and a left wheel to which motion power from the left driving source is transmitted and a right driving system including a right axle and a right wheel to which motion power from the right driving source is transmitted.

The layout of each of the left driving source and the right driving source may or may not be set to correspond to the left-right direction determined based on the forward-traveling direction of the vehicle. The left driving system and the right driving system may operate independently of each other, or may be connected to each other via a transmission mechanism or a power distributing mechanism. The disclosed vehicle control device and vehicle control method can be used to control an in-wheel motor vehicle that drives the left and right wheels with respective different motors and control of the vehicle, and also to control a torque vectoring vehicle in which the left and right wheels can transmit a driving force and a torque to each other.

[Embodiment]

[1. Configuration]

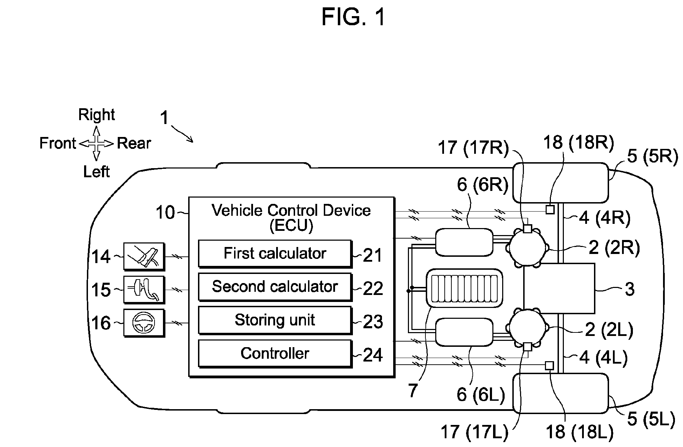

A vehicle control device 10 according to an embodiment is mounted on a vehicle 1 shown in FIG. 1. The vehicle 1 includes left and right wheels 5 (wheels) aligned side by side in the vehicle width direction, a power distributing mechanism 3 (differential mechanism) that applies a torque difference to the left and right wheels 5, and a pair of motors 2 connected to the power distributing mechanism 3. In the drawing illustrating the embodiment, alphabets R and L which are attached to the numerical signs represent the arrangement positions of the elements related to the signs (i.e., the positions on the right side and the left side of the vehicle 1). For example, the reference sign 5L represents one (left wheel) of the left and right wheels 5 located on the left side of the vehicle 1, and the reference sign 5R represents the other (right wheel) located on the right side. The left and right wheels 5 may be positioned anywhere in the front-rear direction and may be front wheels or rear wheels of the vehicle 1.

Each motor 2 (driving source) has a function of driving at least either one of the front wheels and the rear wheels of the vehicle 1, and can have a function of driving all four wheels. Of the pair of motors 2, one arranged on the left side is a left motor 2L (left driving source), and the other arranged on the right side is a right motor 2R (right driving source). The left motor 2L and the right motor 2R operate independently of each other, and may individually output driving forces having different magnitudes from each other. These motors 2 are connected to the power distributing mechanism 3 each via a pair of reduction mechanisms provided separately from each other.

The vehicle 1 includes the power distributing mechanism 3 that amplifies the torque difference between the pair of motors 2 and distributes the torque difference to each of left and right wheels 5. The power distributing mechanism 3 of the present embodiment is a differential mechanism having a yaw control function (AYC (Active Yaw Control) function), and is interposed between an axle 4 (left axle 4L, left shaft) connected to the left wheel 5L and an axle 4 (right axle 4R, right shaft) connected to the right wheel 5R. The yaw control function is a function that adjusts the yaw moment by actively controlling the sharing ratio of the driving forces (driving torques) of the left and right wheels 5 and stabilizes the posture of the vehicle 1. Inside the power distributing mechanism 3, a planetary gear mechanism and a differential gear mechanism are incorporated, for example. A vehicle driving device including the pair of motors 2 and the power distributing mechanism 3 is also referred to as a DM-AYC (Dual Motor AYC) device.

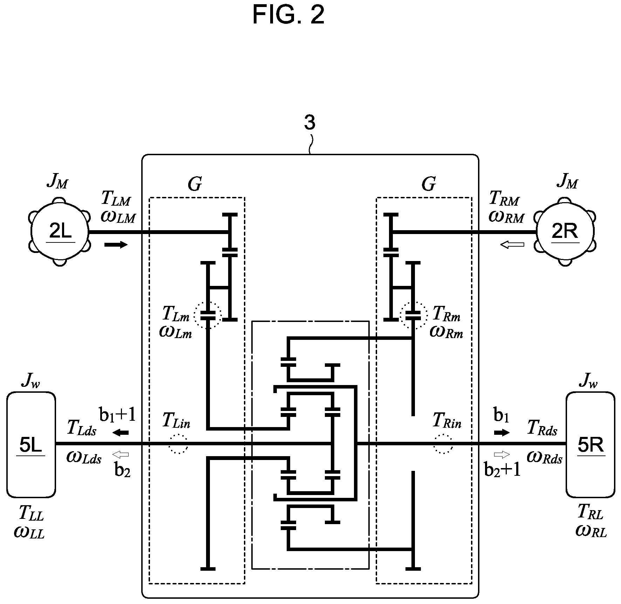

As shown in FIG. 2, the power distributing mechanism 3 includes the pair of reduction mechanisms (gear trains surrounded by dashed lines in FIG. 2) that reduces the rotational speeds of the motors 2 and a transmission mechanism (gear trains surrounded by one-dot dashed lines in FIG. 2). Each reduction mechanism is a mechanism that increases the torque by reducing the speed of the torque (driving force) output from the corresponding motor 2. The reduction ratio G of the reduction mechanism is appropriately set according to the output characteristic and the performance of the motor 2. If the torque performances of the motors 2 are sufficiently high, the reduction mechanisms may be omitted. The transmission mechanism is a mechanism that amplifies the difference between torques transmitted to the left and right wheels 5.

The transmission mechanism of the power distributing mechanism 3 shown in FIG. 2 includes a pair of planetary gear mechanisms. These planetary gear mechanisms have a structure in which planetary gears provided on respective carriers are connected to each other and also the rotation shafts of the planetary gears. Each carrier supports the planetary gears such that the planetary gears can rotate and revolve around the sun gear. Further, the driving forces transmitted from the left and right motors 2 are inputted into the ring gear and the sun gear of one of the planetary gear mechanisms. The driving forces transmitted to the left and right wheels 5 are taken out from the sun gear and the carrier of the other planetary gear mechanism. Note that the structure of the power distributing mechanism 3 shown in FIG. 2 is merely exemplary for achieving the yaw control function, and can be replaced with another known structure.

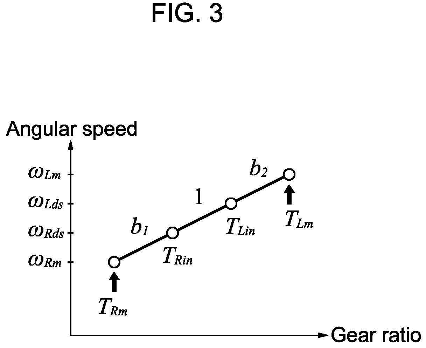

In FIG. 3, the symbol $J_M$ represents motor inertia (moment of inertia of the motors 2) and the symbol $J_w$ represents wheel inertia (moment of inertia of the left and right wheels 5). Also, in relation to the parameters of a left driving system, the symbol $T_{LM}$ represents a left-motor input torque (left instruction torque), the symbol $T_{Lm}$ represents a left-motor input torque reduced by the reduction mechanism, the symbol $\omega_{LM}$ represents a left-motor angular speed, the symbol $\omega_{Lm}$ represents a left-motor angular speed reduced by the reduction mechanism, the symbol $T_{Lin}$ represents a left driving-side torque, the symbol $T_{Lds}$ represents a left-axle torque, the symbol $T_{LL}$ represents a left-wheel load-side torque, the symbol $\omega_{Lds}$ represents a left driving-side angular speed, and the symbol $\omega_{LL}$ represents a left-wheel angular speed (target speed of the left wheel 5L). Similarly, in relation to the parameters of a right driving system, the symbol $T_{RM}$ represents a right-motor input torque (right instruction torque), the symbol $T_{Rm}$ represents a right-motor input torque reduced by the reduction mechanism, the symbol $\omega_{RM}$ represents a right-motor angular speed, the symbol $\omega_{Rm}$ represents a right-motor angular speed reduced by the reduction mechanism, the symbol $T_{Rin}$ represents a right driving-side torque, the symbol $T_{Rds}$ represents a right-axle torque, the symbol $T_{RL}$ represents a right-wheel load-side torque, the symbol $\omega_{Rds}$ represents a right driving-side angular speed, and the symbol $\omega_{RL}$ represents a right-wheel angular speed (target speed of the right wheel 5R).

FIG. 3 is a speed graph of the power distributing mechanism 3. The symbols $b_1$, $b_2$ shown in FIGs. 2 and 3 represent torque difference amplification ratios (reduction ratios, differential reduction ratios) determined according to the configuration of the gears incorporated in the power distributing mechanism 3. The torque difference amplification ratio related to motion power transmission from the left motor 2L to the right wheel 5R is represented by $b_1$ and the torque difference amplification ratio related to motion power transmission from the left motor 2L to the left wheel 5L is represented by $b_1+1$. In addition, the torque difference amplification ratio related to motion power transmission from the right motor 2R to the left wheel 5L is represented by $b_2$ and the torque difference amplification ratio related to motion power transmission from the right motor 2R to the right wheel 5R is represented by $b_2+1$.

As shown in FIG. 1, the pair of motors 2 are electrically connected to a battery 7 via respective inverters 6 (6L, 6R). Each inverter 6 is a converter (DC-AC inverter) that mutually converts the power (DC power) of a DC circuit on the side of the battery 7 and the power (AC power) of the AC circuits on the side of the motors 2. The battery 7 is, for example, a lithium-ion secondary battery or a nickel-metal hydride secondary battery, and is a secondary battery capable of supplying a high-voltage DC current of several hundred volts. While the motors 2 are power running, the DC power is converted into AC power by the inverters 6 and the converted AC power is then supplied to the motors 2. At the time of power generation of the motors 2, the generated electric power is converted into DC power by the inverters 6 and is charged into the battery 7. The operating status of each inverter 6 is controlled by the vehicle control device 10.

The vehicle control device 10 is one of electronic control units (ECUs) mounted on the vehicle 1. The vehicle control device 10 has a function of controlling outputs of the left motor 2L (left driving source) and the right motor 2R (right driving source) in the vehicle 1 provided with the left driving system including the left axle 4L and the left wheel 5L to which motion power from the left motor 2L is transmitted and the right driving system including the right axle 4R and the right wheel 5R to which motion power from the right motor 2R is transmitted.

The vehicle control device 10 includes a processor (central processing unit), a memory (main memory), a storage device (storage), an interface device, and the like, which do not appear in the drawings, and these elements are communicably coupled to each other via an internal bus. The contents of the determination and the control performed by the vehicle control device 10 are recorded and stored as firmware or an application program in the memory, and when the program is to be executed, the contents of the program are expanded in a memory space and executed by the processor.

To the vehicle control device 10, an accelerator position sensor 14, a brake sensor 15, a steering sensor 16, resolvers 17, and wheel speed sensors 18 are connected. The accelerator position sensor 14 is a sensor that detects the amount (accelerator opening) of depressing of the accelerator pedal and the depression speed. The brake sensor 15 is a sensor that detects the amount (brake pedal stroke) of depressing of the brake pedal and the depression speed. The steering sensor 16 is a sensor that detects a steering angle (actual steering angle or steering angle of the steering wheel) of the left and right wheels 5.

The resolvers 17 (17L, 17R) are sensors that detect the speeds of the motors 2 and are provided one for each of the pair of motors 2. Each resolver 17 outputs data of a rotational angle of the motor 2 in the form of a two-phase AC voltage. The speed of the motor 2 is grasped from the chronological change of the AC voltage. The wheel speed sensors 18 (18L, 18R) are sensors that detect the speeds of the axles 4. The vehicle control device 10 controls the operating status of the inverters 6 (6L, 6R) on the basis of the information detected by the above sensors 14 to 18 and thereby controls the outputs of the pair of motors 2 (2L, 2R). The resolvers 17 may be replaced by other sensors (e.g., hall sensors and encoders) different in internal structure and operation principle.

[2. Vehicle Control Device]

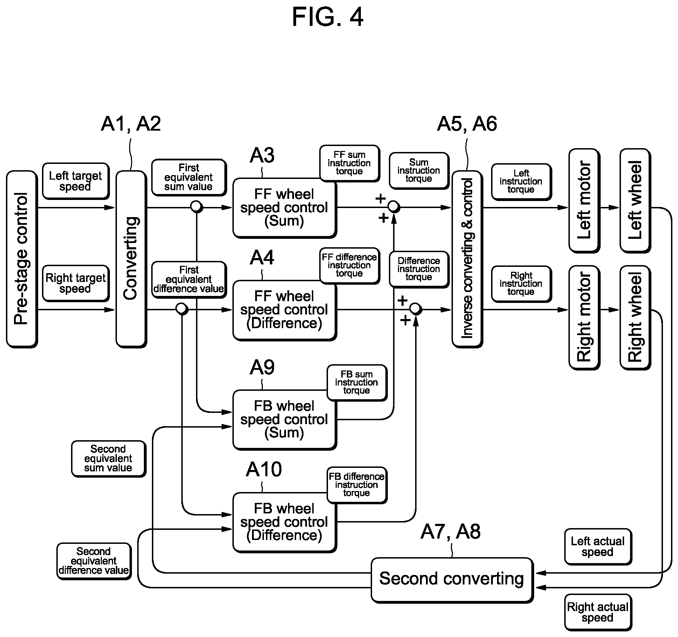

FIG. 4 is a schematic block diagram showing a flow of control (output control for the motors 2 that adopt the vehicle control method according to the embodiment) executed in the vehicle control device 10. In the storage device of the vehicle control device 10, a sum model and a difference model are stored in advance. This means that, in the present vehicle control method, a sum model and a difference model are first prepared. The sum model models motion states of the left driving system, the right driving system, the left driving source (motor 2L), and the right driving source (motor 2R) while the vehicle 1 is running straight, and the difference model models motion states of the left driving system, the right driving system, the left driving source (motor 2L), and the right driving source (motor 2R) while the vehicle 1 is cornering.

The sum model includes a sum-mode FF (feed-forward) model and a sum-mode FB (feed-back) model. The vehicle control device 10 of the present embodiment accurately grasps the motion states of the left driving system and the right driving system while the vehicle 1 is running straight by using the sum-mode FF model and the sum-mode FB model in combination (by executing both Step A3 and Step A9 in FIG. 4). However, the control based on the sum-mode FF model (Step A3) may be omitted, and only the control based on the sum-mode FB model (Step A9) may be performed.

Similarly, the difference model includes a difference-mode FF model and a difference-mode FB model. The vehicle control device 10 of the present embodiment accurately grasps the motion states of the left driving system and the right driving system while the vehicle 1 is cornering by using the difference-mode FF model and the difference-mode FB model in combination (by executing both Step A4 and Step A10 in FIG. 4). The control based on the difference-mode FF model (Step A4) may be omitted, and only the control based on the difference-mode FB model (Step A10) may be performed.

The sum-mode FF model is a model for grasping a FF sum instruction torque (feed-forward sum instruction torque) by being applied with the first equivalent sum value. The control that obtains the FF sum instruction torque based on the sum-mode FF model is referred to as a FF wheel speed control (sum). The FF wheel speed control (sum) is a feed-forward control (open-loop control). On the other hand, the sum-mode FB model is a model for grasping a FB sum instruction torque (feed-back sum instruction torque) by being applied with the first equivalent sum value and the second equivalent sum value. The control that obtains a FB sum instruction torque based on the sum-mode FB model is referred to as a FB wheel speed control (sum). The FB wheel speed control (sum) is a feed-back control (closed-loop control).

The first equivalent sum value is a generic term for a value corresponding to a sum of a left target speed and a right target speed. The left target speed is representing a target speed of the left driving system or the left motor 2L among parameters (representing the behavior of the left driving system) including input or output parameters of the left driving system. The right target speed is representing a target speed of the right driving system or the right motor 2R among parameters (representing the behavior of the left driving system) including input or output parameters of the right driving system. The first equivalent sum value may be not only a simple sum but also a product of the sum and a predetermined coefficient or a half of the sum (arithmetic mean value), for example. The second equivalent sum value is a generic term for a value corresponding to the sum of an actual speed of the left driving system or the left motor 2L and an actual speed of the right driving system or the right motor 2R. Like the first equivalent sum value, the second equivalent sum value may be not only a simple sum but also a product of the sum and a predetermined coefficient or a half of the sum (arithmetic mean value), for example.

The FF sum instruction torque derived from the sum-mode FF model means a torque corresponding to the sum of the torques required to cause the actual speeds of the left driving system and the right driving system (or the left motor 2L and the right motor 2R) while the vehicle 1 is running straight to follow the respective target speeds. The FB sum instruction torque derived from the sum-mode FB model means a torque serving as a feed-back control amount required to approximate the difference (gap) between the first equivalent sum value and the second equivalent sum value to zero.

The difference-mode FF model is a model for grasping a FF difference instruction torque (feed-forward difference instruction torque) by being applied with the first equivalent difference value. The control that obtains the FF difference instruction torque based on the difference-mode FF model is referred to as a FF wheel speed control (difference). The FF wheel speed control (difference) is a feed-forward control (open-loop control). On the other hand, the difference-mode FB model is a model for grasping a FB difference instruction torque (feed-back difference instruction torque) by being applied with the first equivalent difference value and the second equivalent difference value. The control that obtains the FB difference instruction torque based on the difference-mode FB model is referred to as a FB wheel speed control (difference). The FB wheel speed control (difference) is a feed-back control (closed-loop control).

The first equivalent difference value is a generic term for a value corresponding to a difference between the left target speed and the right target speed. The left target speed is representing a target speed of the left driving system or the left motor 2L among parameters (representing the behavior of the left driving system) including input or output parameters of the left driving system. The right target speed is representing a target speed of the right driving system or the right motor 2R among parameters (representing the behavior of the left driving system) including input or output parameters of the right driving system. The first equivalent difference value may be not only a simple difference but also a product of the difference and a predetermined coefficient or a half of the difference, for example. The second equivalent difference value is a generic term for a value corresponding to the difference between the actual speed of the left driving system or the left motor 2L and the actual speed of the right driving system or the right motor 2R. Like the first equivalent difference value, the second equivalent difference value may be not only a simple difference but also a product of the difference and a predetermined coefficient or a half of the difference, for example.

The FF difference instruction torque derived from the difference-mode FF model means a torque corresponding to the difference between the torques required to cause the actual speeds of the left driving source and the right driving source (or the left motor 2L and the right motor 2R) while the vehicle 1 is cornering to follow the respective target speeds. In addition, the FB difference instruction torque derived from the difference-mode FB model means a torque serving as a feed-back control amount required to approximate the difference (gap) between the first equivalent difference value and the second equivalent difference value to zero.

Steps A1 and A2 in FIG. 4 correspond to a step (converting step) of calculating the first equivalent sum value and the first equivalent difference value based on the left target speed and the right target speed. The values of the left target speed and the right target speed are calculated by any known pre-stage control. In the pre-stage control, the left target speed and the right target speed having magnitudes corresponding to the driving state of the vehicle 1 and a driver's intention (e.g., acceleration intention, deceleration intention, and turning intention) are calculated on the basis of the information detected by the various sensors 14 to 18, for example.

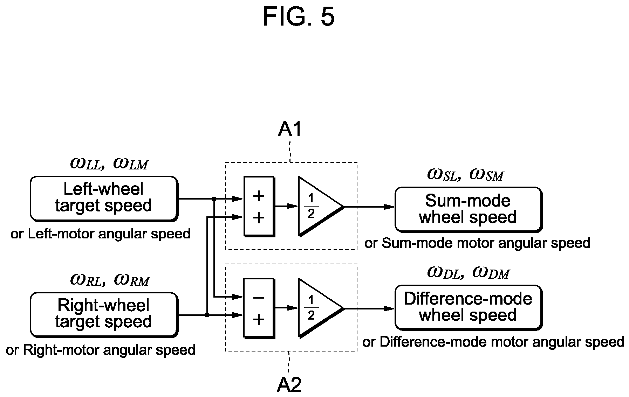

FIG. 5 is a block diagram illustrating a specific example of Steps A1 and A2 (converting step) in FIG. 4. In FIG. 5, "left-wheel target angular speed $\omega_{LL}$ (or left-motor angular speed $\omega_{LM}$)" is a specific example of the left target speed, and "right-wheel target angular speed $\omega_{RL}$ (or right-motor angular speed $\omega_{RM}$)" is a specific example of the right target speed. In Step A1, the half of the sum of the target speeds of the left and right wheels 5 is calculated and outputted as a sum-mode wheel angular speed $\omega_{SL}$ (or a sum-mode motor angular speed $\omega_{SM}$). The sum-mode wheel angular speed $\omega_{SL}$ (or the sum-mode motor angular speed $\omega_{SM}$) outputted here corresponds to a first equivalent sum value to be transmitted to Step A3 and Step A9 in FIG. 4. Further, in Step A2, the half of the difference between the target speeds of the left and right wheels 5 is calculated and outputted as a difference-mode wheel angular speed $\omega_{DL}$ (or a difference-mode motor angular speed $\omega_{DM}$). The difference-mode wheel angular speed $\omega_{DL}$ (or the difference-mode motor angular speed $\omega_{DM}$) outputted here corresponds to a first equivalent difference value to be transmitted to Step A4 and Step A10 in FIG. 4.

Step A3 in FIG. 4 corresponds to a step (FF wheel speed control (sum)) in which the first equivalent sum value is applied to the sum-mode FF model and thereby the FF sum instruction torque is obtained. Besides, Step A4 corresponds to a step (FF wheel speed control (difference)) in which the first equivalent difference value is applied to the difference-mode FF model and thereby the FF difference instruction torque is obtained. Similarly, Step A9 corresponds to a step (FB wheel speed control (sum)) in which the first equivalent sum value and the second equivalent sum value are applied to the sum-mode FB model, and thereby the FB sum instruction torque that makes the gap between the first equivalent sum value and the second equivalent sum value to zero is obtained. Step A10 corresponds to a step (FB wheel speed control (difference)) in which the first equivalent difference value and the second equivalent difference value are applied to the difference-mode FB model, and thereby the FB difference instruction torque that makes the gap between the first equivalent difference value and the second equivalent difference value to zero is obtained.

Thereafter, the sum of the FF sum instruction torque and the FB sum instruction torque is transmitted as a final sum instruction torque to Steps A5 and A6, and the sum of the FF difference instruction torque and the FB difference instruction torque is transmitted as a final difference instruction torque to Steps A5 and A6.

Steps A5 and A6 in FIG. 4 correspond to a step (inverse converting and control step) of calculating the left instruction torque and the right instruction torque using the sum instruction torque and the difference instruction torque, and controlling the torques of the left motor 2L and the right motor 2R on the basis of the left instruction torque and the right instruction torque.

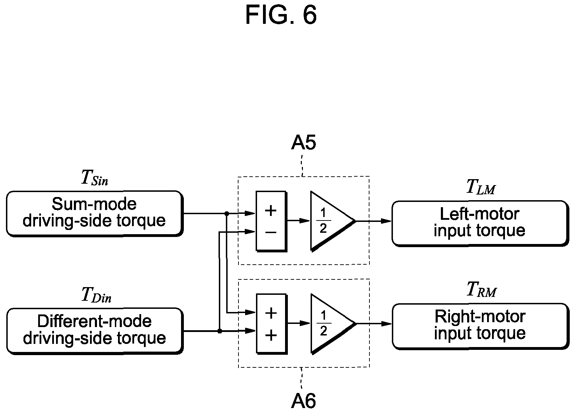

FIG. 6 is a block diagram illustrating a specific example of Steps A5 and A6 (inverse converting and control step) in FIG. 4. In FIG. 6, a "sum-mode driving-side torque $T_{Sin}$" is a specific example of the sum instruction torque, and a "difference-mode driving-side torque $T_{Din}$" is a specific difference example of a difference instruction torque. In Step A5, the half of the value obtained by subtracting the difference-mode driving-side torque $T_{Din}$ from the sum-mode driving-side torque $T_{Sin}$ is calculated and outputted as the left-motor input torque $T_{LM}$. The left-motor input torque $T_{LM}$ outputted here corresponds to the left instruction torque in FIG. 4. In addition, in Step A6, the half of the sum of the sum-mode driving-side torque $T_{Sin}$ and the difference-mode driving-side torque $T_{Din}$ is calculated and outputted as the right-motor input torque $T_{RM}$. The right-motor input torque $T_{RM}$ outputted here corresponds to the right instruction torque in FIG. 4.

Steps A7 and A8 in FIG. 4 corresponds to a step (second converting step) of calculating the second equivalent sum value and the second equivalent difference value on the basis of the left actual speed, which is the actual speed of the left driving system (or left motor 2L), and the right actual speed, which is the actual speed of the right driving system (or right motor 2R). The left actual speed and the right actual speed are detected by, for example, the left and right wheel speed sensors 18L and 18R, respectively.

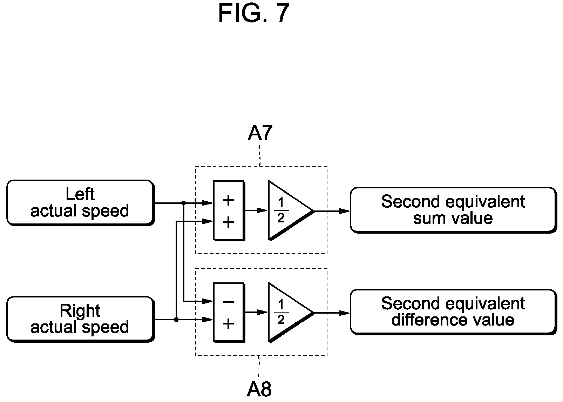

FIG. 7 is a block diagram illustrating a specific example of Steps A7 and A8 (second converting step) in FIG. 4. In Step A7, the half of the sum of the left actual speed and the right actual speed is calculated and outputted as the second equivalent sum value. Further, in Step A8, the half of the value obtained by subtracting the left actual speed from the right actual speed is calculated, and is outputted as the second equivalent difference value.

Next, description will now be made in relation to a specific configuration to perform the above-described control. As shown in FIG. 1, the vehicle control device 10 includes a first calculator 21, a second calculator 22, a storing unit 23, and a controller 24. These elements are obtained by classifying the functions of the vehicle controlling apparatus 10 for convenience. These elements may be described as independent programs for implementing the functions of the respective elements. Alternatively, these elements may be described as a combined program of multiple elements being combined.

The first calculator 21 calculates the first equivalent sum value and the first equivalent difference value. The first equivalent sum value and the first equivalent difference value are calculated based on a left target speed and a counterpart right target speed. The left target speed includes, for example, various target speeds related to driving of the left wheel 5L, such as the left-motor angular speed $\omega_{LM}$, a (reduced) left-motor angular speed $\omega_{Lm}$, a left driving-side angular speed $\omega_{Lds}$, and the left-wheel angular speed $\omega_{LL}$ (left-wheel target speed). Similarly, the right target speed includes, for example, various target speeds related to driving of the right wheel 5R, such as the right-motor angular speed $\omega_{RM}$, a (reduced) right-motor angular speed $\omega_{Rm}$, a right driving-side angular speed $\omega_{Rds}$, and the right-wheel angular speed $\omega_{RL}$ (right-wheel target speed).

The first equivalent sum value includes, for example, the sum-mode motor angular speed $\omega_{SM}$, a (reduced) sum-mode motor angular speed $\omega_{Sm}$, a sum-mode driving-side angular speed $\omega_{Sds}$, and a sum-mode wheel angular speed $\omega_{SL}$. Similarly, the first equivalent difference value includes, for example, the difference-mode motor angular speed $\omega_{DM}$, a (reduced) difference-mode motor angular speed $\omega_{Dm}$, the difference-mode driving-side angular speed $\omega_{Dds}$, and the difference-mode wheel angular speed $\omega_{DL}$.

Each of the sum-mode motor angular speed $\omega_{SM}$ and the difference-mode motor angular speed $\omega_{DM}$ is calculated on the basis of the left-motor angular speed $\omega_{LM}$ and the right-motor angular speed $\omega_{RM}$. Each of the (reduced) sum-mode motor angular speed $\omega_{Sm}$ and the (reduced) difference-mode motor angular speed $\omega_{Dm}$ is calculated on the basis of the (reduced) left-motor angular speed $\omega_{Lm}$ and the (reduced) right-motor angular speed $\omega_{Rm}$. The following calculation equations are used in a case where the half of the sum of the left target speed and the right target speed is defined as the first equivalent sum value and the half of the difference between the left target speed and the right target speed is defined as the first equivalent difference value.

[Math 1]

$$\begin{pmatrix} \omega_{SM} \\ \omega_{DM} \end{pmatrix} = \begin{pmatrix} \frac{1}{2} & \frac{1}{2} \\ \frac{1}{2} & -\frac{1}{2} \end{pmatrix} \begin{pmatrix} \omega_{RM} \\ \omega_{LM} \end{pmatrix}, \begin{pmatrix} \omega_{Sm} \\ \omega_{Dm} \end{pmatrix} = \begin{pmatrix} \frac{1}{2} & \frac{1}{2} \\ \frac{1}{2} & -\frac{1}{2} \end{pmatrix} \begin{pmatrix} \omega_{Rm} \\ \omega_{Lm} \end{pmatrix}$$

$$\begin{pmatrix} \omega_{Sds} \\ \omega_{Dds} \end{pmatrix} = \begin{pmatrix} \frac{1}{2} & \frac{1}{2} \\ \frac{1}{2} & -\frac{1}{2} \end{pmatrix} \begin{pmatrix} \omega_{Rds} \\ \omega_{Lds} \end{pmatrix}, \begin{pmatrix} \omega_{SL} \\ \omega_{DL} \end{pmatrix} = \begin{pmatrix} \frac{1}{2} & \frac{1}{2} \\ \frac{1}{2} & -\frac{1}{2} \end{pmatrix} \begin{pmatrix} \omega_{RL} \\ \omega_{LL} \end{pmatrix}$$

The second calculator 22 calculates the second equivalent sum value and the second equivalent difference value. The second equivalent sum value and the second equivalent difference value are calculated on the basis of the left actual speed, which is the actual speed of the left driving system or the left motor 2L, and the right actual speed, which is the actual speed of the right driving system or the right motor 2R. The left actual speed includes various actual speeds related to driving of the left wheel 5L, such as a left-motor angular speed $\omega_{LM}$ and a (reduced) left-motor angular speed $\omega_{Lm}$, a left driving-side angular speed $\omega_{Lds}$, and a left-wheel angular speed $\omega_{LL}$ (left wheel actual speed). Similarly, the right actual speed includes various actual speeds related to the driving of the right wheel 5R, such as a right-motor angular speed $\omega_{RM}$ and a (reduced) right-motor angular speed $\omega_{Rm}$, a right driving-side angular speed $\omega_{Rds}$, and a right-wheel angular speed $\omega_{RL}$ (right wheel actual speed). The calculation formula shown in above [Math 1] can be used as a calculation formula when the half of the sum of the left actual speed and the right actual speed is set to the second equivalent sum value and the half of the difference between the left actual speed and the right actual speed is set to the second equivalent difference value.

The storing unit 23 stores the sum model and the difference model. The sum model (sum-mode FF model, sum-mode FB model) represents motion states of the left driving system, the right driving system, the left driving source (left motor 2L), and the right driving source (right motor 2R) while the vehicle 1 is running straight. The difference model (difference-mode FF model, difference-mode FB model) represents motion states of the left driving system, the right driving system, the left driving source (left motor 2L), and the right driving source (right motor 2R) while the vehicle 1 is cornering. Before describing the sum model and the difference model, the schematic configurations of the left driving system and the right driving system of vehicle 1 will now be described.

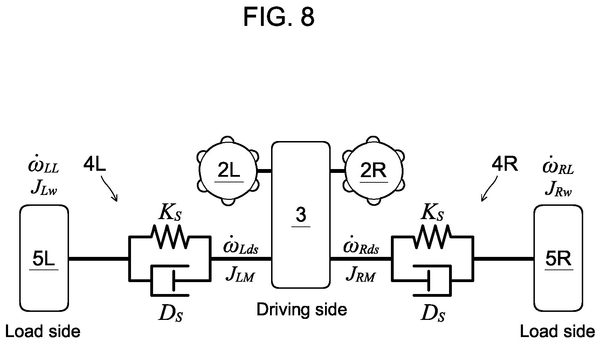

FIG. 8 is a schematic diagram of the configurations of the left driving system and the right driving system of the vehicle 1. Each of the left axle 4L and the right axle 4R can be regarded as a structure in which a spring (axle stiffness $K_s$) and a damper (axle viscosity $D_s$) are connected in parallel. In FIG. 8, the symbol $J_{LM}$ represents inertia of the side of the power distributing mechanism 3 (driving side) against the left axle 4L, the symbol $J_{Lw}$ represents inertia of the side of the left wheel 5L (load side) against the left axle 4L, the symbol $J_{RM}$ represents inertia of the side of the power distributing mechanism 3 (driving side) against the right axle 4R, and the symbol $J_{Rw}$ is inertia of the side of the right wheel 5R (load side) against the right axle 4R. FIG. 8 also shows a differential value (left driving-side angular acceleration) of the left driving-side angular speed $\omega_{Lds}$, a differential value (left-wheel angular acceleration) of the left-wheel angular speed $\omega_{LL}$, a differential value (right driving-side angular acceleration) of the right driving-side angular speed $\omega_{Rds}$, and a differential value (right-wheel angular acceleration) of the right-wheel angular speed $\omega_{RL}$.

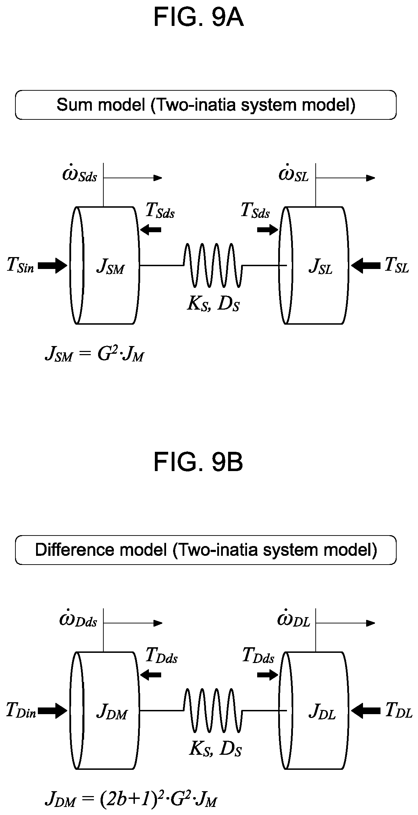

On the basis of the above schematic diagram, the configuration of the sum model is modeled to have the configuration shown in FIG. 9A, and the configuration of the difference model is modeled to have the configuration shown in FIG. 9B. The sum model is preferably used for damping control and slip control on the axle 4 and the left and right wheels 5 while the vehicle is running straight, and the difference model is preferably used for damping control and slip control on the axle 4 and the left and right wheels 5 while the vehicle is cornering. In this embodiment, both the sum model and the difference model are two-inertia system models, but each may alternatively be configured as a multi-inertia system model including three or more moments of inertia and/or spring dampers.

As shown in FIG. 9A, the sum model includes driving-side inertia $J_{SM}$, a spring damper designed with a stiffness $K_s$ and a viscosity $D_s$, and load-side inertia (sum-mode wheel nominal inertia) $J_{SL}$. The driving-side inertia $J_{SM}$ is calculated based on the inertia $J_M$ of the driving sources (left motor 2L and right motor 2R), and is, for example, expressed by the equation $J_{SM} = G^2 J_M$. The load-side inertia $J_{SL}$ is calculated based on the vehicle body weight M (calibrated in terms of a wheel). In the calculation of the driving-side inertia $J_{SM}$ and the load-side inertia $J_{SL}$, friction may also be considered. The equations of motion of the sum model are shown below.

[Math 2]

Equation of motion of driving side

$$J_{SM}\dot{\omega}_{Sds} = T_{Sin} - T_{Sds}$$

Equation of motion of load side

$$J_{SL}\dot{\omega}_{SL} = T_{Sds} - T_{SL}$$

Equation of motion of spring dumper system

$$T_{Sds} = K_S \int (\omega_{Sds} - \omega_{SL}) + D_S(\omega_{Sds} - \omega_{SL})$$

As shown in FIG. 9B, the difference model includes driving-side inertia $J_{DM}$ corresponding to equivalent inertia when a left-right difference is generated (i.e., while the vehicle 1 is cornering), the spring damper designed with the stiffness $K_s$ and the viscosity $D_s$, and load-side inertia (difference-mode wheel nominal inertia) $J_{DL}$. The driving-side inertia $J_{DM}$ is calculated based on the inertia $J_M$ of the driving sources (left driving source and right driving source) and the torque difference amplification ratios (e.g., $b_1$, $b_2$) of the power distributing mechanism 3, and is, for example, expressed by the equation $J_{DM} = (2b_1+1)^2 G^2 J_M$. The load-side inertia $J_{DL}$ is calculated based on the yaw inertia (calibrated in terms of a wheel) of the vehicle 1. In the calculation of the driving-side inertia $J_{DM}$ and the load-side inertia $J_{DL}$, friction may also be considered. The equations of motion of the difference model are shown below.

[Math 3]

Equation of motion of driving side

$$J_{DM}\dot{\omega}_{Dds} = T_{Din} - T_{Dds}$$

Equation of motion of load side

$$J_{DL}\dot{\omega}_{DL} = T_{Dds} - T_{DL}$$

Equation of motion of spring dumper system

$$T_{Dds} = K_S \int (\omega_{Dds} - \omega_{DL}) + D_S(\omega_{Dds} - \omega_{DL})$$

Application of the first equivalent sum value to the above sum model obtains the FF sum instruction torque corresponding to the sum of torques required to cause the actual speeds of the left driving system and the right driving system (or left motor 2L and right motor 2R) while the vehicle 1 is running straight to follow the respective target speeds. In addition, application of the first equivalent sum value and the second equivalent sum value to the above sum model obtains the FB sum instruction torque. For example, as a result of application of the sum-mode wheel angular speed $\omega_{SL}$ to the sum-mode FF model, a sum-mode driving-side torque $T_{Sin}$ is obtained. In addition, as a result of application of the sum-mode wheel angular speed $\omega_{SL}$ and the second equivalent sum value to the above sum value to the sum-mode FB model, the FB sum instruction torque is obtained. The sum of the FF sum instruction torque and the FB sum instruction torque is the final sum instruction torque.

The same applies to the difference model. Application of the first equivalent difference value to the difference model obtains the FF difference instruction torque corresponding to the difference of the torques required to cause the actual speeds of the left driving system and the right driving system (or the left motor 2L and the right motor 2R) while the vehicle 1 is cornering to follow the target speeds. Furthermore, application of the first equivalent difference value and the second equivalent difference value obtains the FB difference instruction torque. For example, as a result of application of a difference-mode motor angular speed $\omega_{DL}$ to the difference-mode FF model, the difference-mode driving-side torque $T_{Din}$ is obtained as the FF difference instruction torque. Also, as a result of application of the difference-mode wheel angular speed $\omega_{DL}$ and the second equivalent difference value to the difference-mode FB model, the FB difference instruction torque is obtained. The sum of the FF difference instruction torque and the FB difference instruction torque is the final difference instruction torque.

The controller 24 obtains the sum instruction torque and the difference instruction torque by appropriately applying the first equivalent sum value and the first equivalent difference value calculated by the first calculator 21 and the second equivalent sum value and the second equivalent difference value calculated by the second calculator 22, and controls the outputs of the left motor 2L and the right motor 2R, using the sum instruction torque and the difference instruction torque. The controller 24 controls the operating states of inverters 6 by driving the pair of motors 2 such that the sum instruction torque and the difference instruction torque can be obtained (that is, such that both the sum instruction torque and the difference instruction torque can be both achieved). This makes the controller 24 possible to conduct accurate control such that the motion states of the left driving system and the right driving system become desired states.

Here, description will now be made in relation to the case where application of, for example, the sum-mode wheel angular speed $\omega_{SL}$ and the difference-mode wheel angular speed $\omega_{DL}$ calculated on the basis of target angular speeds (target wheel speeds) of the left and right wheels 5 to the sum model and the difference model obtains the sum-mode driving-side torque $T_{Sin}$ and the difference-mode driving-side torque $T_{Din}$. The controller 23 calculates the torque to be outputted by each of the pair of motors 2 on the basis of the sum-mode driving-side torque $T_{Sin}$ and the difference-mode driving-side torque $T_{Din}$, and drives the pair of inverters 6 such that the calculated torques can be obtained.

The calculation of the sum-mode driving-side torque $T_{Sin}$ and the difference-mode driving-side torque $T_{Din}$ can be achieved by performing an arithmetic operation reverse to the arithmetic operation of the first equivalent sum value and the first equivalent difference value. For example, the torques of the motors 2 to be calculated are set to the "left-motor input torque and the right-motor input torque $T_{RM}$", and the torques when these torques are transmitted to the axles 4 are set to a "left driving-side torque $T_{Lin}$ and a right driving-side torque $T_{Rin}$". Then, the values of the left driving-side torque $T_{Lin}$ and the right driving-side torque $T_{Rin}$ are calculated which causes the sum of the left driving-side torque $T_{Lin}$ and the right driving-side torque $T_{Rin}$ to match the sum-mode driving-side torque $T_{Sin}$ and causes the difference between the left driving-side torque $T_{Lin}$ and the right driving-side torque $T_{Rin}$ to match the difference-mode driving-side torque $T_{Din}$. Subsequently, the left-motor input torque $T_{LM}$ and the right-motor input torque $T_{RM}$ corresponding to the left driving-side torque $T_{Lin}$ and the right driving-side torque $T_{Rin}$ are calculated.

Then, the inverters 6 are driven such that the calculated left-motor input torque and right-motor input torque $T_{RM}$ can be obtained. This control makes the actual speeds of the motors 2 and the left and right wheels 5 precisely follow the respective target speeds, so that the controllability of the wheel speeds can be enhanced. In addition, since the wheel speeds easily match the target speeds even if disturbance is input, the wheel speed are less likely to change suddenly when the frictional resistance of the traveling road surface and the driving forces change, and consequently the generation of slippage is suppressed.

[3. Specific Examples of Sum Model and Difference Model]

[A. transfer function of load side (sum model)]

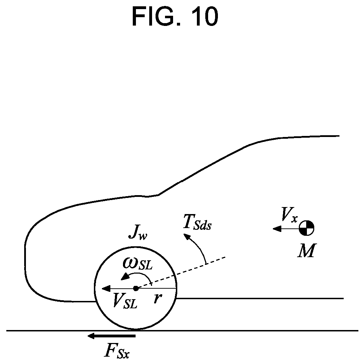

FIG. 10 is a schematic diagram to derive load-side inertia while the vehicle 1 is running straight. Here, the vehicle body speed while the vehicle 1 is running straight is represented by the symbol $V_x$, the wheel speed (moving forward speed of the left and right wheels 5) is represented by the symbol $V_{SL}$, the vehicle body weight is represented by the symbol M, the wheel angular speed (sum-mode wheel speed) is represented by the symbol $\omega_{SL}$, the driving force of the left and right wheels 5 is represented by the symbol $F_{Sx}$, and the dynamic rolling radius of the wheel is represented by the symbol r. If the sum-mode wheel load-side torque $T_{SL}$ (the torque corresponding to the reaction force from the road surface or the driving force) is linearized on the assumption that the sum-mode wheel load-side torque $T_{SL}$ is determined by the sum-mode axle torque $T_{Sds}$ serving as the driving-side torque, the following equations hold.

[Math 4]

Relational equation between wheel angular speed $\omega_{SL}$ and torque

$$\omega_{SL} = \frac{1}{J_{SL} \cdot s + D_L}(T_{Sds} - T_{SL})$$

Relational equation between driving force $F_{Sx}$ and sum-mode wheel load-side torque $T_{SL}$

$$T_{SL} = r \cdot F_{Sx}$$

Relational equation between wheel speed $V_{SL}$ and wheel angular speed $\omega_{SL}$

$$V_x = \frac{2}{M \cdot s} F_{Sx}$$

Relational equation between wheel speed $V_{SL}$ and wheel angular speed $\omega_{SL}$

$$V_{SL} = r \cdot \omega_{SL}$$

Sum-mode wheel nominal slip ratio

$$\lambda_{Sn} = \frac{V_{SL} - V_x}{V_{SL}}$$

On the basis of the above equations, the transfer function on the load-side in the sum mode (a relational equation including a transfer function representing the input/output characteristic of the two-inertia system related to the sum model) can be obtained. The symbol $\lambda_{Sn}$ represents a sum-mode wheel nominal slip ratio (wheel nominal slip ratio in the sum model).

[Math 5]

$$\omega_{SL} = \frac{T_{Sds}}{J_w + r^2 M(1 - \lambda_{Sn})/2} \cdot \frac{1}{s} = \frac{T_{Sds}}{J_{SL}} \cdot \frac{1}{s}$$

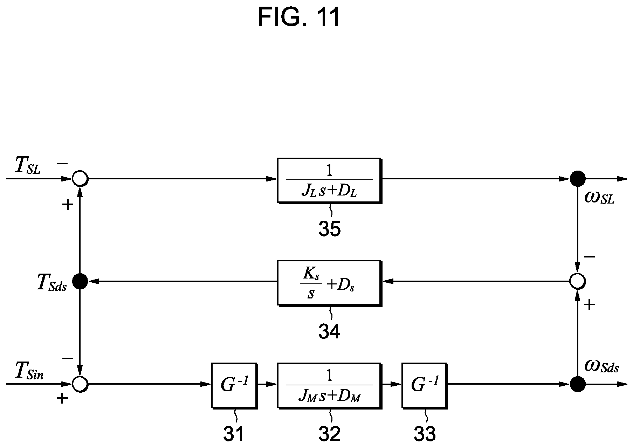

FIG. 11 is a schematic diagram illustrating a relationship between a torque and a speed in the sum model. Here, the relationship among the sum-mode wheel load-side torque $T_{SL}$, the sum-mode wheel angular speed $\omega_{SL}$, the sum-mode axle torque $T_{Sds}$, the sum-mode driving-side torque $T_{Sin}$, and the sum-mode driving-side angular speed $\omega_{Sds}$ is shown. In FIG. 11, the symbol $J_M$ represents motor inertia, the symbol $D_M$ represents a motor viscosity, the symbol $J_L$ represents inertia on the side (driving side) of the power distribution mechanism 3 with respect to the axle 4, and the symbol $D_L$ is a load-side viscosity.

The sum-mode driving-side angular speed $\omega_{Sds}$ is calculated by multiplying a value obtained by subtracting the sum-mode axle torque $T_{Sds}$ from the sum-mode driving-side torque $T_{Sin}$ with "$G^{-1}$", "$1/(J_M \cdot s + D_M)$", and "$G^{-1}$".

The sum-mode axle torque $T_{Sds}$ is calculated by multiplying a value obtained by subtracting the sum-mode wheel angular speed $\omega_{SL}$ from the sum-mode driving-side angular speed $\omega_{Sds}$ with "$(K_s/s) + D_s$".

The sum-mode wheel angular speed $\omega_{SL}$ is calculated by multiplying a value obtained by subtracting the sum-mode wheel load-side torque $T_{SL}$ from the sum-mode axle torque $T_{Sds}$ with "$1/(J_L \cdot S + D_L)$".

[B. transfer function of load side (difference model)]

The yaw rate, the dread, the difference between wheel speeds of the left and right wheels while the vehicle 1 is cornering are set to the symbol $\gamma$, the symbol d, and the symbol $V_{Dx}$, respectively. In addition, the symbol $V_x$ represents the vehicle speed, the symbol $V_{rlx}$ represents the left wheel reference wheel speed, and the symbol $V_{rrx}$ represents the right wheel reference wheel speed.

Considering the relationships between the yaw rate $\gamma$ and the difference-mode wheel angular speed $\omega_{DL}$ is considered on the assumption that the steering angle is zero, the following equations hold.

[Math 6]

Right wheel reference wheel speed

$$V_{rrx} = V_x + \frac{d}{2}\gamma$$

Left wheel reference wheel speed

$$V_{rlx} = V_x - \frac{d}{2}\gamma$$

Difference between wheel speeds of the left and right wheels

$$V_{Dx} = \frac{V_{rrx} - V_{rlx}}{2} = \frac{d}{2}\gamma$$

Difference-mode wheel slip ratio

$$\lambda_D = \frac{r \cdot \omega_{DL} - V_{Dx}}{r \cdot \omega_{DL}}$$

Relational equation between yaw rate and difference

between wheel speeds of the left and right wheels

$$\gamma = \frac{r}{d/2}(1 - \lambda_D)\omega_{DL}$$

In addition, equations of motion on the driving side in the difference mode, the yaw motion, and the lateral motion hold as follows. In the equations, the symbol $\delta_f$ represents the steering angle, the symbol $a_y$ represents a lateral acceleration, the symbol I represents yaw inertia of the vehicle 1, the symbol $C_f$ represents cornering power of the front wheel, the symbol $C_r$ represents cornering power of the rear wheel, and the symbol $l_f$ represents the distance between the center of gravity and the front axle, the symbol $l_r$ represents the distance between the center of gravity and the rear axle, the symbol $\beta$ represents a slip angle of the vehicle body, and the symbol $F_{Dx}$ represents a left-right difference of driving power,

the symbol $\lambda_D$ represents a slip ratio in the difference model.

[Math 7]

$$\omega_{DL} = \frac{1}{J_w \cdot s + D_L}(T_{Dds} - T_{DL})$$

$$T_{DL} = r \cdot F_{Dx}$$

$$I\gamma s = -2C_f l_f\left(\beta + \frac{l_f}{V}\gamma - \delta_f\right) + 2C_r l_r\left(\beta + \frac{l_r}{V}\gamma\right) + \frac{d}{2} \cdot 2F_{Dx}$$

$$a_y = V(\beta s + \gamma)$$

$$\gamma = \frac{r}{d/2}(1 - \lambda_D)\omega_{DL}$$

Assuming that the steering angle $\delta_f$ and the lateral acceleration $a_y$ are zeros in order to model the state of the transition from a running-straight state to a cornering state of the vehicle 1, the following transfer function on the load-side in the difference mode (a relational equation including a transfer function representing the input/output characteristic of the two-inertia system related to the difference model) can be obtained.

[Math 8]

$$\frac{\omega_{DL}}{T_{Dds}} = \frac{s}{\left\{J_w + \frac{2r^2}{d^2}(1 - \lambda_D)I\right\}s^2 + \left\{D_L + \frac{4r^2}{d^2V}(1 - \lambda_D)\left(C_f l_f^2 + c_r l_r^2\right)\right\}s + \frac{4r^2}{d^2}(1 - \lambda_D)\left(c_f l_f - c_r l_r\right)}$$

$$= \frac{1}{J_{DL}s + D_{DL} + \frac{K_{DL}}{s}}$$

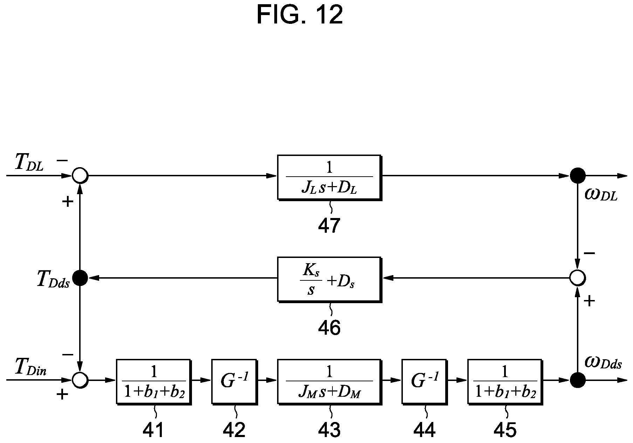

FIG. 12 is a schematic diagram illustrating a relationship between a torque and a speed in the difference model. Here, the relationship among the difference-mode wheel load-side torque $T_{DL}$, the difference-mode wheel angular speed $\omega_{DL}$, the difference-mode axle torque $T_{Dds}$, the difference-mode driving-side torque $T_{Din}$, and the difference-mode driving-side angular speed $\omega_{Dds}$ is shown.

The difference-mode driving-side angular speed $\omega_{Dds}$ is calculated by multiplying a value obtained by subtracting the difference-mode axle torque $T_{Dds}$ from the difference-mode driving-side torque $T_{Din}$ with "1/(1 + $b_1$ + $b_2$)", "$G^{-1}$", "1/($J_M \cdot s + D_M$)", "$G^{-1}$" and "1/ (1 + $b_1$ + $b_2$)".

The difference-mode axle torque $T_{Dds}$ is calculated by multiplying a value obtained by subtracting the difference-mode wheel angular speed $\omega_{DL}$ from the difference-mode driving-side angular speed $\omega_{Dds}$ with "($K_s$/s) + $D_s$".

The difference-mode wheel angular speed $\omega_{DL}$ is calculated by multiplying a value obtained by subtracting the difference-mode wheel load-side torque $T_{DL}$ from the difference-mode axle torque $T_{Dds}$ with "1/($J_L \cdot s + D_L$)".

[C. equation of motion of driving side (sum/difference models)]

In deriving the above sum model and difference model, the power distributing mechanism 3 may formulate the models as follows by using vector expressions.

[Math 9]

Matrix of respective gear ratios

$$G = \begin{pmatrix} G & 0 \\ 0 & G \end{pmatrix}, B = \begin{pmatrix} b_2 + 1 & -b_2 \\ -b_1 & b_1 + 1 \end{pmatrix}$$

Angular speed vectors

$$\omega_L = \begin{pmatrix} \omega_{RL} \\ \omega_{LL} \end{pmatrix}, \omega_{ds} = \begin{pmatrix} \omega_{Rds} \\ \omega_{Lds} \end{pmatrix}, \omega_M = GB\omega_{ds} = \begin{pmatrix} \omega_{RM} \\ \omega_{LM} \end{pmatrix}$$

Torque vector

$$T_{ds} = \begin{pmatrix} T_{Rds} \\ T_{Lds} \end{pmatrix}, T_M = \begin{pmatrix} T_{RM} \\ T_{LM} \end{pmatrix}, T_L = \begin{pmatrix} T_{RL} \\ T_{LL} \end{pmatrix}, T_{in} = B^T G T_M = \begin{pmatrix} T_{Rin} \\ T_{Lin} \end{pmatrix}$$

Dynamics of left and right wheels 5 (load side), driving side, and axle 4

$$P_L = \begin{pmatrix} \dfrac{1}{J_{SL}s + D_{SL}} & 0 \\ 0 & \dfrac{1}{J_{DL}s + D_{DL}} \end{pmatrix}, P_M = \begin{pmatrix} \dfrac{1}{J_M s + D_M} & 0 \\ 0 & \dfrac{1}{J_M s + D_M} \end{pmatrix}$$

$$P_{DS} = \begin{pmatrix} D_s + \dfrac{K_s}{s} & 0 \\ 0 & D_s + \dfrac{K_s}{s} \end{pmatrix}$$

Establishing the equation of motion (sum and difference) on the driving side for each of the left and right sides using the above equations obtains the following result. In the equations, the symbol $Z_{11}$ represents the reduction ratio from the left driving source (left motor 2L) to the left shaft (left axle 4L), the symbol $Z_{22}$ represents the reduction ratio from the right driving source (right motor 2R) to the right shaft (right axle 4R), and the symbol $Z_c$ represents the reduction ratio from the left and right driving sources to the respective opposing shafts.

[Math 10]

$$\begin{pmatrix} \omega_{Rds} \\ \omega_{Lds} \end{pmatrix} = \frac{G^{-2}P_M}{|Z|} \begin{pmatrix} Z_{22} & -Z_c \\ -Z_c & Z_{11} \end{pmatrix} \begin{pmatrix} T_{Rin} - T_{Rds} \\ T_{Lin} - T_{Lds} \end{pmatrix}$$

$$Z^{-1} = B^{-1^T}B^{-1} = \frac{1}{|Z|} \begin{pmatrix} Z_{22} & -Z_c \\ -Z_c & Z_{11} \end{pmatrix}$$

$$= \frac{1}{(1 + b_1 + b_2)^2} \begin{pmatrix} b_1^2 + 2b_1 + b_2^2 + 1 & b_1^2 + b_1 + b_2^2 + b_2 \\ b_1^2 + b_1 + b_2^2 + b_2 & b_2^2 + 2b_2 + b_1^2 + 1 \end{pmatrix}$$

$$Z_{11} = b_2^2 + 2b_2 + b_1^2 + 1$$

$$Z_{22} = b_1^2 + 2b_1 + b_2^2 + 1$$

$$Z_c = -(b_1^2 + b_1 + b_2^2 + b_2)$$

Applying a matrix for conversion to the sum and difference modes to both sides of each of the above equations obtains the following equation.

[Math 11]

$$\begin{pmatrix} \frac{1}{2} & \frac{1}{2} \\ \frac{1}{2} & -\frac{1}{2} \end{pmatrix} \begin{pmatrix} \omega_{Rds} \\ \omega_{Lds} \end{pmatrix} = \frac{G^{-2}P_M}{|Z|} \begin{pmatrix} \frac{1}{2} & \frac{1}{2} \\ \frac{1}{2} & -\frac{1}{2} \end{pmatrix} \begin{pmatrix} Z_{22} & -Z_c \\ -Z_c & Z_{11} \end{pmatrix} \begin{pmatrix} T_{Rin} - T_{Rds} \\ T_{Lin} - T_{Lds} \end{pmatrix}$$

$$= \frac{G^{-2}P_M}{2|Z|} \begin{pmatrix} Z_{22} - Z_c & Z_{11} - Z_c \\ Z_{22} + Z_c & -(Z_{11} + Z_c) \end{pmatrix} \begin{pmatrix} T_{Rin} - T_{Rds} \\ T_{Lin} - T_{Lds} \end{pmatrix}$$

Here, assuming $b_1 = b_2 = b$, the equations $Z_{11} - Z_c = Z_{22} - Z_c = |Z|$ and $Z_{11} + Z_c = Z_{22} + Z_c = 1$ hold. Therefore, the equations can be modified as follows and the equation of motion of the motors 2 that can deal with the sum/difference modes can be obtained. By dividing the equation of motion of the driving side into the equation of the sum mode and that of the difference mode, the two equations do not interfere with each other.

[Math 12]

$$\begin{pmatrix} \frac{1}{2} & \frac{1}{2} \\ \frac{1}{2} & -\frac{1}{2} \end{pmatrix} \begin{pmatrix} \omega_{Rds} \\ \omega_{Lds} \end{pmatrix} = \frac{G^{-2}P_M}{2|Z|} \begin{pmatrix} |Z| & |Z| \\ 1 & -1 \end{pmatrix} \begin{pmatrix} T_{Rin} - T_{Rds} \\ T_{Lin} - T_{Lds} \end{pmatrix} = \frac{P_M}{G^2} \begin{pmatrix} 1 & 0 \\ 0 & \frac{1}{|Z|} \end{pmatrix} \begin{pmatrix} \frac{1}{2} & \frac{1}{2} \\ \frac{1}{2} & -\frac{1}{2} \end{pmatrix} \begin{pmatrix} T_{Rin} - T_{Rds} \\ T_{Lin} - T_{Lds} \end{pmatrix}$$

Equation of motion of driving side

$$\begin{pmatrix} \omega_{Sds} \\ \omega_{Dds} \end{pmatrix} = \frac{P_M}{G^2} \begin{pmatrix} 1 & 0 \\ 0 & \frac{1}{|Z|} \end{pmatrix} \begin{pmatrix} T_{Sin} - T_{Sds} \\ T_{Din} - T_{Dds} \end{pmatrix}$$

[D. equation of motions of wheel and axle (sum/difference models)]

Likewise the derivation of the equation of motion of the driving side, the equations of motion of the left and right wheels 5 (load side) and the axle 4 may be formulated as follows.

[Math 13]

Equation of motion of left and right wheels 5 (load side)

$$\begin{pmatrix} \omega_{SL} \\ \omega_{DL} \end{pmatrix} = \begin{pmatrix} \frac{1}{J_{SL}s + D_{SL}} & 0 \\ 0 & \frac{1}{J_{DL}s + D_{DL}} \end{pmatrix} \begin{pmatrix} T_{Sds} \\ T_{Dds} \end{pmatrix} = P_L \begin{pmatrix} T_{Sds} \\ T_{Dds} \end{pmatrix}$$

Equation of motion of axle 4

$$\begin{pmatrix} T_{Sds} \\ T_{Dds} \end{pmatrix} = P_{DS} \begin{pmatrix} \omega_{Sds} - \omega_{SL} \\ \omega_{Dds} - \omega_{DL} \end{pmatrix}$$

$$\begin{pmatrix} T_{Sds} \\ T_{Dds} \end{pmatrix} = \left( D_s + \frac{K_s}{s} \right) \begin{pmatrix} \omega_{Sds} - \omega_{SL} \\ \omega_{Dds} - \omega_{DL} \end{pmatrix}$$

When the equation of motion of the left and right wheels 5 (load-side) is assigned to the equation of motion of the axle 4 and the equation of the motion the axle 4 is rearranged using the relationships of $J_{SM} = G^2 J_M$, $D_{SM} = G^2 D_M$, $J_{DM} = G^2 (2b+1)^2 J_M$, $D_{DM} = G^2 (2b+1)^2 D_M$, the following transfer function is obtained.

[Math 14]

$$\text{Transfer function } \begin{pmatrix} \omega_{SL}/T_{Sin} \\ \omega_{DL}/T_{Din} \end{pmatrix} =$$

$$\begin{pmatrix} \dfrac{D_S s + K_S}{J_{SM} J_{SL} s^3 + \{J_{SM}(D_{SL}+D_S)+J_{SL}(D_{SM}+D_S)\}s^2 + \{D_{SM}D_{SL}+D_{SM}D_S+D_{SL}D_S+K_S(J_{SM}+J_{SL})\}s+K_S(D_{SM}+D_{SL})} \\ \dfrac{D_S s + K_S}{J_{DM} J_{DL} s^3 + \{J_{DM}(D_{DL}+D_S)+J_{DL}(D_{DM}+D_S)\}s^2 + \{D_{DM}D_{DL}+D_{DM}D_S+D_{DL}D_S+K_S(J_{DM}+J_{DL})\}s+K_S(D_{DM}+D_{DL})} \end{pmatrix}$$

Further, if the target wheel speeds in the sum model (sum-mode FF model) and the difference model (difference-mode FF model) are set to $\omega_{SL\text{-ref}}$ and $\omega_{DL\text{-ref}}$, respectively, and the inverse of the above transfer function is formed into a proper form with a second-order low-pass filter, the following equation that can calculate axle input torque with respect to the target speed can be obtained. The FF wheel speed control (sum) and the FF wheel speed control (difference) may be performed by using such an equation. When the following equation is implemented by format shown in FIG. 4, it is sufficient to set the relationships $K_s = \infty$, $D_s = 0$, $D_{SM} = 0$, $D_{SL} = 0$, $D_{DM} = 0$, and $D_{DL} = 0$.

[Math 15]

$$\text{Inverse of the transfer function } \begin{pmatrix} T_{Sin}/\omega_{SL-ref} \\ T_{Din}/\omega_{DL-ref} \end{pmatrix}$$

$$= \begin{pmatrix} \dfrac{J_{SM} J_{SL} s^3 + \{J_{SM}(D_{SL}+D_s)+J_{SL}(D_{SM}+D_s)\}s^2 + \{D_{SM}D_{SL}+D_{SM}D_s+D_{SL}D_s+K_s(J_{SM}+J_{SL})\}s+K_s(D_{SM}+D_{SL})}{D_s s + K_s} \\ \dfrac{J_{DM} J_{DL} s^3 + \{J_{DM}(D_{DL}+D_s)+J_{DL}(D_{DM}+D_s)\}s^2 + \{D_{DM}D_{DL}+D_{DM}D_s+D_{DL}D_s+K_s(J_{DM}+J_{DL})\}s+K_s(D_{DM}+D_{DL})}{D_s s + K_s} \end{pmatrix} \dfrac{1}{(\tau s + 1)^2}$$

[E. Calculating Target Speed]

In calculation of the target speeds of the motors 2, the following simultaneous equations obtained on the assumption that the equation of motion of the axles 4 and the equation of motion of left/right wheels 5 (load-side) are both satisfied may be used.

[Math 16]

$$\begin{pmatrix} \omega_{SL}/\omega_{Sds} \\ \omega_{DL}/\omega_{Dds} \end{pmatrix} = \begin{pmatrix} \dfrac{D_S s + K_S}{J_{SL} s^2 + (D_{SL} + D_S)s + K_S} \\ \dfrac{D_S s + K_S}{J_{DL} s^2 + (D_{DL} + D_S)s + K_S} \end{pmatrix}$$

Here, when the target wheel speeds in the sum model (sum-mode FB model) and the difference model (difference-mode FB model) are set to $\omega_{SL\text{-ref}}$ and $\omega_{DL\text{-ref}}$ and the target driving-side angular speeds are set to $\omega_{Sds\text{-ref}}$ and $\omega_{Dds\text{-ref}}$, the relationship between the target wheel speed and the target driving-side speed can be expressed as follows. The FB wheel speed control (sum) and the FB wheel speed control (difference) may be carried out by using such an equation.

[Math 17]

$$\begin{pmatrix} \omega_{Sds-ref}/\omega_{SL-ref} \\ \omega_{Dds-ref}/\omega_{DL-ref} \end{pmatrix} = \begin{pmatrix} \dfrac{J_{SL} s^2 + (D_{SL} + D_S)s + K_S}{D_S s + K_S} \\ \dfrac{J_{DL} s^2 + (D_{DL} + D_S)s + K_S}{D_S s + K_S} \end{pmatrix}$$

[4. Effect]

(1) The above vehicle control device 10 includes the first calculator 21, the second calculator 22, the sum-mode FB model, the difference-mode FB model, and the control unit 24.

The first calculator 21 calculates the first equivalent sum value corresponding to the sum of the left target speed, which is the target speed of the left driving system or the left motor 2L, and the right target speed, which is the target speed of the right driving system or the right motor 2R, and also calculates the first equivalent difference value corresponding to the difference between the left target speed and the right target speed. The second calculator 22 calculates the second equivalent sum value corresponding to the sum of the left actual speed, which is the actual speed of the left driving system or the left motor 2L, and the right actual speed, which is the actual speed of the right driving system or the right motor 2R, and calculates the second equivalent difference value corresponding to the difference between the left actual speed and the right actual speed.

The sum-mode FB model models the motion states of the left driving system, the right driving system, the left driving source (left motor 2L), and the right driving source (right motor 2R) while the vehicle 1 is running straight. The difference mode FB model models the motion states of the left driving system, the right driving system, the left driving source (left motor 2L), and the right driving source (right motor 2R) while the vehicle 1 is cornering. The sum-mode FB model and the difference-mode FB model are stored in, for example, the storing unit 23. By applying the first equivalent sum value and the second equivalent sum value to the sum-mode FB model, the FB sum instruction torque for causing the actual speeds of the driving systems and the motors 2 to follow the respective target speeds are derived, and by applying the first equivalent difference value and the second equivalent difference value to the difference-mode FB model, the FB difference instruction torque for causing the actual speeds of the driving systems and the motors 2 to follow the respective target speeds are derived. The controller 24 controls the torques of the left motor 2L and the right motor 2R, using the FB sum instruction torque and the FB difference instruction torque.

As the above, the instruction torques that can achieve target speeds of the driving systems or the motor 2 can be obtained with a simple configuration by separating the sum model corresponding to a running-straight state of the vehicle 1 and the difference model corresponding to a cornering state of the vehicle 1 from each other, and applying the first equivalent sum value, the first equivalent difference value, the second equivalent sum value, and the second equivalent difference value to the respective models to derive FB sum instruction torques and FB difference instruction torques. Consequently, the outputs of the left and right motors 2 can be controlled such that the instruction torques can be obtained. Accordingly, it is possible to cause the actual speeds of the driving system or the motor 2 to precisely follow the target speeds.

Furthermore, the state (behavior) of a driving system that have different characteristic between the running-straight state of the vehicle and the cornering state of the vehicle can be precisely grasped and controlled, and also the controllability (e.g., control precision and control response speed) can be enhanced with a simple configuration so that driving force control that can deal with any running state can be achieved. In addition, the response characteristics while the vehicle 1 is running straight and while the vehicle 1 is cornering can be reflected in the outputs of the left and right motors 2, so that a desired motion states can be easily achieved.

(2) In the above embodiment, both the sum-mode FB model and the difference-mode FB model can be constructed to be two-inertia system models. This makes it possible to precisely grasp the motion states of the left and right driving systems while the vehicle 1 is running straight and while the vehicle 1 is cornering with a simple configuration. In addition, on a characteristic that is different between running straight and cornering, control considering the respective viscoelasticity can be carried out. Therefore, the controllability of vehicle 1 can be enhanced.

(3) As shown in FIG. 9A, the above sum-mode FB model can be expressed by the two-inertia system including the driving-side inertia calculated based on inertia of the left motor 2L and the right motor 2R, the spring damper designed with the stiffness and viscosity, and the load-side inertia calculated based on the vehicle body weight of the vehicle 1. The input/output characteristic of this two-inertia system can be expressed by, for example, the transfer function shown in [Math 5], [Math 16], [Math 17], and others. As a result, the behavior of the driving system while the vehicle 1 is running straight can be precisely grasped, considering the viscoelasticity, so that the controllability of the vehicle 1 can be enhanced.

(4) As shown in FIG. 9B, the above difference-mode FB model can be expressed by the two-inertia system including the driving-side inertia corresponding to the equivalent inertia calculated based on a torque difference amplification ratio of when a left-right difference is generated, the spring damper designed with the stiffness and viscosity, and the load-side inertia calculated based on the yaw inertia of the vehicle 1. The input/output characteristic of this two-inertia system can be expressed by, for example, the transfer function shown in [Math 8], [Math 16], [Math 17], and others. As a result, the behavior of the driving system while the vehicle 1 is cornering can be precisely grasped, considering the viscoelasticity, so that the controllability of the vehicle 1 can be enhanced.

[5. Miscellaneous]

The above embodiment is merely illustrative, and is not intended to exclude the application of various modifications and techniques not explicitly described in the present embodiment. Each configuration of the present embodiment can be variously modified and implemented without departing from the scope thereof. In addition, the configurations of the present embodiment can be selected and omitted as needed, or can be combined appropriately. For example, the above embodiment describes the 1 that mounts thereon the pair of motors 2 serving as driving sources, but the motors 2 may be alternatively replaced by an internal combustion engine. The specific type of the driving source is not limited.

The above embodiment illustrates the vehicle 1 that includes a vehicle driving device (DM-AYC device) including the pair of motors 2 and the power distributing mechanism 3. However, the concept of the sum model and the difference model can be applied to any vehicle exemplified by a vehicle without the power distributing mechanism 3 or an in-wheel motor vehicle. A vehicle provided with at least a left driving system including a left axle and a left wheel to which motion power from the left driving source is transmitted and a right driving system including a right axle and a right wheel to which motion power from the right driving source is transmitted can undergo the control the same as the above embodiment and can obtain the same actions and effects as those of the above embodiment.

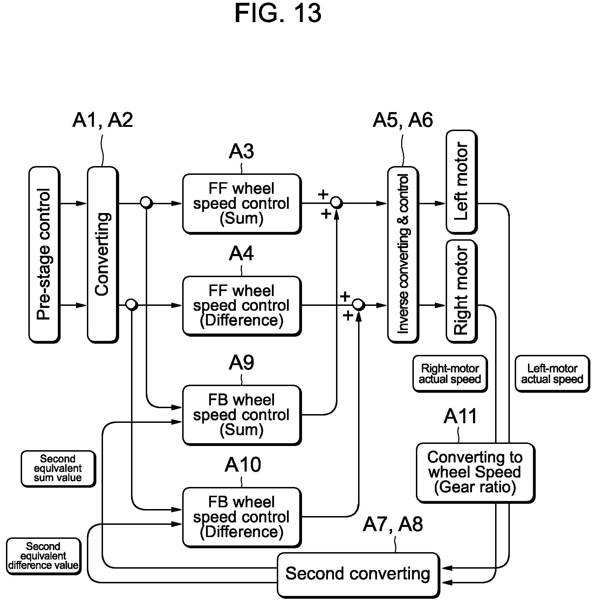

FIG. 13 is a block diagram showing a flow of a vehicle control method according to a first modification. In this modification, in calculating the second equivalent sum value and the second equivalent difference value to be applied to the sum-mode FF model and the sum-mode FB model, the actual speed (left-motor actual speed) of the left motor 2L and the actual speed (right-motor actual speed) of the right motor 2R are referred to. That is, in the example shown in FIG. 4, the actual speeds of the left/right wheels 5 detected by the wheel speed sensors 18L, 18R are referred to, whereas in the first modification shown in FIG. 13, the actual speeds of the motors 2 detected by the resolvers 17L and 17R are referred to.

The actual speeds of the motors 2 are converted into wheel speeds (the actual speeds of the left/right wheels 5) based on the various gear-ratios $G$, $b_1$, and $b_2$ related to the power distribution mechanism 3 in Step A11, and the converted values are introduced into Steps A7 and A8. As the above, by performing the control based on the actual speeds of the motors 2, the responsiveness of the actual speeds to the target speeds in the motors 2 can be enhanced, and the actual speeds of the driving systems or the motors 2 can be made to more precisely follow the respective target speeds.

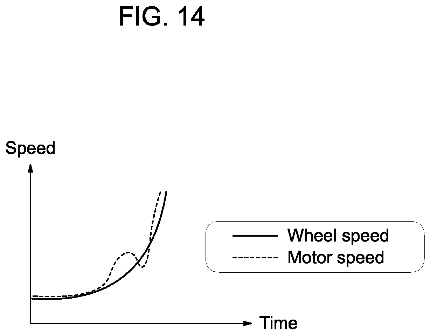

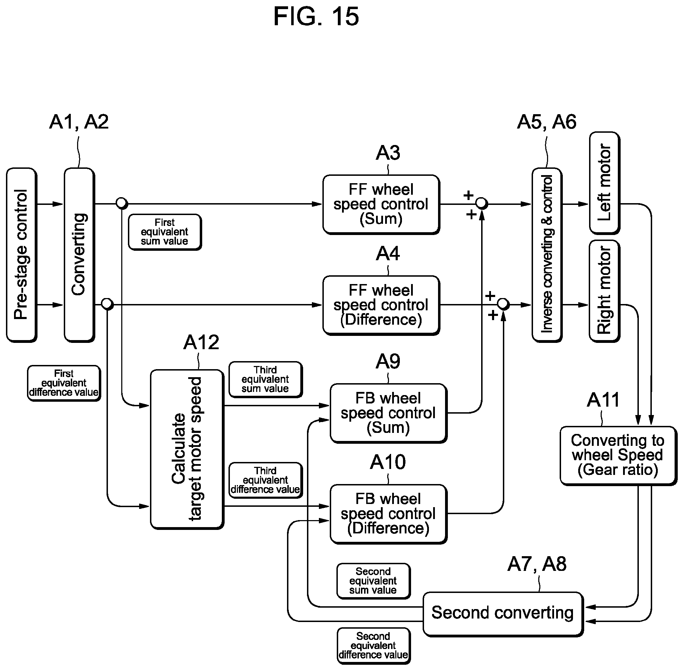

FIG. 14 is a graph for explaining a gap between the motor speed and the wheel speed, and FIG. 15 is a block diagram showing a flow of a vehicle control method according to a second modification. In the driving system of the vehicle 1, the behavior of the motor speed and the behavior of the wheel speed may deviate from each other as shown in FIG. 14. In this case, for example, in Steps A9 and A10 of FIG. 4, simply comparing the first equivalent sum value derived from the target wheel speeds of left/right wheels 5 and the second equivalent sum value derived from the actual speeds of the motors 2 has a possibility that high-precision feed-back is not obtained.

As a solution to the above, the second modification may add Step A12 shown in FIG. 15 to convert the first equivalent sum value and the first equivalent difference value calculated from the target speeds of the left/right wheels 5 to the first equivalent sum value and the first equivalent difference value of the target speeds of the motors 2 by using the sum model and the differential model in which the viscoelasticity as shown in FIGS. 9A and 9B is considered. Here, "the first equivalent sum value and the first equivalent difference value of the target speeds of the motors 2 (or the driving systems)" are referred to as "a third equivalent sum value and a third equivalent difference value", respectively. Step A12 corresponds to a step (target motor sped calculating step) in which the first equivalent sum value and the first equivalent difference value are converted into the third sum equivalent and the third equivalent difference value.

On the assumption that the arithmetic operation of Step A12 is processed by the first calculator 21, the first calculator 21 converts the first equivalent sum value into the third equivalent sum value corresponding to the sum of the target speed of the left driving source (or left driving system) and the target speed of the right driving source (or right driving system), and converts the first equivalent difference value into the third equivalent difference value corresponding to the difference between the target speed of the left driving source (or left driving system) and the target speed of the right driving source (or right driving system).

In Step A12, the first equivalent sum value obtained in Step A1 is converted into the third equivalent sum value, and the first equivalent difference value obtained in Step A2 is converted into the third equivalent difference value. For example, as a result of application of the sum-mode wheel angular speed $\omega_{SL}$ serving as the first equivalent sum value to the sum model, the sum-mode driving-side angular speed $\omega_{Sds}$ serving as the third equivalent sum value is obtained. In addition, as a result of application of the difference-mode wheel angular speed $\omega_{DL}$ serving as the first equivalent difference value to the difference model, the difference-mode driving-side angular speed $\omega_{Dds}$ serving as the third equivalent difference value is obtained.

The third equivalent sum value calculated in Step A12 is transmitted to StepA9. In Step A9, the FB sum instruction torque for eliminating the gap between the third sum equivalent and the second equivalent sum value is obtained. Similarly, the third equivalent difference value calculated in Step A12 is transmitted to Step A10. In Step A10, the FB difference instruction torque for eliminating the gap between the third equivalent difference value and the second equivalent difference value is obtained.

As described above, by providing Step A12 (target motor speed calculating step) prior to Step A9 (FB wheel speed control (sum)) and Step A10 (FB wheel speed control (difference)), it is possible to calculate the feed-back control amount by comparing the speeds with respect to the motors 2, so that the feed-back control high in responsiveness and precision can be achieved. Consequently, the instruction torques that can achieve the target speeds can be calculated with a simple configuration, so that the controllability can be enhanced.

[Appendix]

In relation to the above embodiment and the modifications, the following appendices will now be disclosed.

[Appendix 1]

A vehicle control method for controlling outputs of a left driving source and a right driving source in a vehicle provided with a left driving system and a right driving system, the left driving system including a left axle and a left wheel, the right driving system including a right axle and a right wheel, motion power from the left driving source being transmitted to the left axle and the left wheel, motion power from the right driving source being transmitted to the right axle and the right wheel, the vehicle control method comprising:

preparing a sum-mode feed-back model and a difference-mode feed-back model, the sum-mode feed-back model modeling motion states of the left driving system, the right driving system, the left driving source, and the right driving source while the vehicle is running straight, the difference-mode feed-back model modeling motion states of the left driving system, the right driving system, the left driving source, and the right driving source while the vehicle is cornering;

calculating a first equivalent sum value corresponding to sum of a left target speed and a right target speed, and a first equivalent difference value corresponding to a difference between the left target speed and the right target speed, the left target speed being a target speed of the left driving system or the left driving source, the right target speed being a target speed of the right driving system or the right driving source;

calculating a second equivalent sum value corresponding to a sum of a left actual speed and a right actual speed, and a second equivalent difference value corresponding to a difference between the left actual speed and the right actual speed, the left actual speed being an actual speed of the left driving system or the left driving source, the right actual speed being an actual speed of the right driving system or the right driving source;

obtaining a feed-back sum instruction torque for causing actual speeds of the left driving system and the right driving system or actual speeds of the left driving source and the right driving source to follow the respective target speeds by applying the first equivalent sum value and the second equivalent sum value to the sum-mode feed-back model;

obtaining a feed-back difference instruction torque for causing the actual speeds to follow the respective target speeds by applying the first equivalent difference value and the second equivalent difference value to the difference-mode feed-back model; and

controlling torques of the left driving source and the right driving source, using the feed-back sum instruction torque and the feed-back difference instruction torque.

[Appendix 2]

The vehicle control method according to appendix 1, further comprising
calculating the second equivalent sum value and the second equivalent difference value based on the respective actual speeds of the left driving source and the right driving source.

[Appendix 3]

The vehicle control method according to appendix 1 or 2, further comprising

converting the first equivalent sum value to a third equivalent sum value corresponding to a sum of a target speed of the left driving source or the left driving system and a target speed of the right driving source or the right driving system, and converting the first equivalent difference value to a third equivalent difference value corresponding to a difference between the target speed of the left driving source or the left driving system and the target speed of the right driving source or the right driving system; and

performing a feed-back control such that the second equivalent sum value and the second equivalent difference value follow the third equivalent sum value and the third equivalent difference value, respectively.

[Appendix 4]

The vehicle control method according to any one of claims 1-4, further comprising:

preparing a sum-mode feed-forward model that models motion states of the left driving system, the right driving system, the left driving source, and the right driving source while the vehicle is running straight, application of the first equivalent sum value to the sum-mode feed-forward model deriving a feed-forward sum instruction torque for causing the actual speeds to follow the respective target speeds, and a difference-mode feed-forward model that models motion states of the left driving system, the right driving system, the left driving source, and the right driving source while the vehicle is cornering, application of the first equivalent difference value to the difference-mode feed-forward model deriving a feed-forward difference instruction torque for causing the actual speeds to follow the respective target speeds; and

controlling the torques of the left driving source and the right driving source, using the feed-back sum instruction torque, the feed-back difference instruction torque, the feed-forward sum instruction torque, and the feed-forward difference instruction torque.

[Industrial Applicability]

The present embodiment is applicable to manufacturing industries of the vehicle control device and also applicable to manufacturing industries of a vehicle provided with the vehicle control device.

[Description of Reference Sign]

1: Vehicle
2: Motor (Driving Source))
3: Power Distributing Mechanism
4: Axle
5: Left and Right Wheels
6: Inverter
7: Battery
10: Vehicle Control Device
14: Accelerator Position Sensor
15: Brake Sensor
16: Steering Angle Sensor
17: Resolver
18: Wheel Speed Sensor
21: First Calculator
22: Second Calculator
23: Storing Unit
24: Controller

**Claims**

1. A vehicle control device for controlling outputs of a left driving source and a right driving source in a vehicle provided with a left driving system and a right driving system, the left driving system including a left axle and a left wheel, the right driving system including a right axle and a right wheel, motion power from the left driving source being transmitted to the left axle and the left wheel, motion power from the right driving source being transmitted to the right axle and the right wheel, the vehicle control device comprising:

   a first calculator that calculates a first equivalent sum value corresponding to sum of a left target speed and a right target speed, and calculates a first equivalent difference value corresponding to a difference between the left target speed and the right target speed, the left target speed being a target speed of the left driving system or the left driving source, the right target speed being a target speed of the right driving system or the right driving source; a second calculator that calculates a second equivalent sum value corresponding to a sum of a left actual speed and a right actual speed, and a second equivalent difference value corresponding to a difference between the left actual speed and the right actual speed, the left actual speed being an actual speed of the left driving system or the left driving source, the right actual speed being an actual speed of the right driving system or the right driving source; a sum-mode feed-back model that models motion states of the left driving system, the right driving system, the left driving source, and the right driving source while the vehicle is running straight, application of the first equivalent sum value and the second equivalent sum value to the sum-mode feed-back model deriving a feed-back sum instruction torque for causing actual speeds of the left driving system and the right driving system or actual speeds of the left driving source and the right driving source to follow the respective target speeds; a difference-mode feed-back model that models motion states of the left driving system, the right driving system, the left driving source, and the right driving source while the vehicle is cornering, application of the first equivalent difference value and the second equivalent difference value to the difference-mode feed-back model deriving a feed-back difference instruction torque for causing the actual speeds to follow the respective target speeds; and a controller that controls torques of the left driving source and the right driving source, using the feed-back sum instruction torque and the feed-back difference instruction torque.

2. The vehicle control device according to claim 1, wherein
the second calculator calculates the second equivalent sum value and the second equivalent difference value based on the respective actual speeds of the left driving source and the right driving source.

3. The vehicle control device according to claim 1, wherein

the first calculator converts the first equivalent sum value to a third equivalent sum value corresponding to a sum of a target speed of the left driving source or the left driving system and a target speed of the right driving source or the right driving system, and converts the first equivalent difference value to a third equivalent difference value corresponding to a difference between the target speed of the left driving source or the left driving system and the target speed of the right driving source or the right driving system; and
the controller performs a feed-back control such that the second equivalent sum value and the second equivalent difference value follow the third equivalent sum value and the third equivalent difference value, respectively.

4. The vehicle control device according to claim 2, wherein

the first calculator converts the first equivalent sum value to a third equivalent sum value corresponding to a sum of a target speed of the left driving source and a target speed of the right driving source, and converts the first equivalent difference value to a third equivalent difference value corresponding to a difference between the target speed of the left driving source and the target speed of the right driving source; and
the controller performs a feed-back control such that the second equivalent sum value and the second equivalent difference value follow the third equivalent sum value and the third equivalent difference value, respectively.

5. The vehicle control device according to any one of claims 1-4, further comprising:

a sum-mode feed-forward model that models motion states of the left driving system, the right driving system, the left driving source, and the right driving source while the vehicle is running straight, application of the first equivalent sum value to the sum-mode feed-forward model deriving a feed-forward sum instruction torque for causing the actual speeds to follow the respective target speeds;
a difference-mode feed-forward model that models motion states of the left driving system, the right driving system, the left driving source, and the right driving source while the vehicle is cornering, application of the first equivalent difference value to the difference-mode feed-forward model deriving a feed-forward difference instruction torque for causing the actual speeds to follow the respective target speeds; and
the controller controls the torques of the left driving source and the right driving source, using the feed-back sum instruction torque, the feed-back difference instruction torque, the feed-forward sum instruction torque, and the feed-forward difference instruction torque.

6. A vehicle control method for controlling outputs of a left driving source and a right driving source in a vehicle provided with a left driving system and a right driving system, the left driving system including a left axle and a left wheel, the right driving system including a right axle and a right wheel, motion power from the left driving source being transmitted to the left axle and the left wheel, motion power from the right driving source being transmitted to the right axle and the right wheel, the vehicle control method comprising:

preparing a sum-mode feed-back model and a difference-mode feed-back model, the sum-mode feed-back model modeling motion states of the left driving system, the right driving system, the left driving source, and the right driving source while the vehicle is running straight, the difference-mode feed-back model modeling motion states of the left driving system, the right driving system, the left driving source, and the right driving source while the vehicle is cornering;

calculating a first equivalent sum value corresponding to sum of a left target speed and a right target speed, and a first equivalent difference value corresponding to a difference between the left target speed and the right target speed, the left target speed being a target speed of the left driving system or the left driving source, the right target speed being a target speed of the right driving system or the right driving source;

calculating a second equivalent sum value corresponding to a sum of a left actual speed and a right actual speed, and a second equivalent difference value corresponding to a difference between the left actual speed and the right actual speed, the left actual speed being an actual speed of the left driving system or the left driving source, the right actual speed being an actual speed of the right driving system or the right driving source;

obtaining a feed-back sum instruction torque for causing actual speeds of the left driving system and the right driving system or actual speeds of the left driving source and the right driving source to follow the respective target speeds by applying the first equivalent sum value and the second equivalent sum value to the sum-mode feed-back model;

obtaining a feed-back difference instruction torque for causing the actual speeds to follow the respective target speeds by applying the first equivalent difference value and the second equivalent difference value to the difference-mode feed-back model; and

controlling torques of the left driving source and the right driving source, using the feed-back sum instruction torque and the feed-back difference instruction torque.

FIG. 1

# FIG. 2

# FIG. 3

FIG. 4

# FIG. 5

A1

$\omega_{LL}, \omega_{LM}$

Left-wheel
target speed

or Left-motor angular speed

$\omega_{RL}, \omega_{RM}$

Right-wheel
target speed

or Right-motor angular speed

+
+

$\frac{1}{2}$

−
+

$\frac{1}{2}$

$\omega_{SL}, \omega_{SM}$

Sum-mode
wheel speed

or Sum-mode motor angular speed

$\omega_{DL}, \omega_{DM}$

Difference-mode
wheel speed

or Difference-mode motor angular speed

A2

FIG. 6

A5

$T_{Sin}$

Sum-mode
driving-side torque

$T_{Din}$

Different-mode
driving-side torque

$+$
$-$

$\frac{1}{2}$

$+$
$+$

$\frac{1}{2}$

A6

$T_{LM}$

Left-motor
input torque

$T_{RM}$

Right-motor
input torque

# FIG. 7

FIG. 8

# FIG. 9A

Sum model (Two-inatia system model)

$\dot{\omega}_{Sds}$

$\dot{\omega}_{SL}$

$T_{Sds}$     $T_{Sds}$

$T_{Sin}$   $J_{SM}$     $J_{SL}$   $T_{SL}$

$K_S, D_S$

$J_{SM} = G^2{\cdot}J_M$

# FIG. 9B

Difference model (Two-inatia system model)

$\dot{\omega}_{Dds}$

$\dot{\omega}_{DL}$

$T_{Dds}$     $T_{Dds}$

$T_{Din}$   $J_{DM}$     $J_{DL}$   $T_{DL}$

$K_S, D_S$

$J_{DM} = (2b+1)^2{\cdot}G^2{\cdot}J_M$

FIG. 10

EP 4 574 534 A1

## FIG. 11

33

# FIG. 12

# FIG. 13

# FIG. 14

# FIG. 15

## INTERNATIONAL SEARCH REPORT

| International application No. |
|---|
| **PCT/JP2023/025525** |

| A. | CLASSIFICATION OF SUBJECT MATTER |
|---|---|

*B60L 15/20*(2006.01)i; *B60L 9/18*(2006.01)i; *B60W 30/188*(2012.01)i
FI:    B60L15/20 S; B60L9/18 P; B60W30/188

According to International Patent Classification (IPC) or to both national classification and IPC

| B. | FIELDS SEARCHED |
|---|---|

Minimum documentation searched (classification system followed by classification symbols)

B60L15/20; B60L9/18; B60W30/188

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 9-130921 A (YAMAHA MOTOR CO LTD) 16 May 1997 (1997-05-16)<br>claims 1-3, paragraphs [0026]-[0086], fig. 1-3 | 1-6 |
| A | JP 2006-43072 A (YAMAHA MOTOR CO LTD) 16 February 2006 (2006-02-16)<br>paragraphs [0063]-[0221], fig. 1-2 | 1-6 |
| A | JP 2004-40975 A (NISSAN MOTOR CO LTD) 05 February 2004 (2004-02-05)<br>paragraphs [0010]-[0075], fig. 1-17 | 1-6 |
| A | JP 2015-192471 A (NISSAN MOTOR CO LTD) 02 November 2015 (2015-11-02)<br>paragraphs [0010]-[0105], fig. 1-14 | 1-6 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 574 534 A1

## INTERNATIONAL SEARCH REPORT
### Information on patent family members

International application No.

**PCT/JP2023/025525**

| Patent document cited in search report | | | Publication date (day/month/year) | Patent family member(s) | Publication date (day/month/year) |
|---|---|---|---|---|---|
| JP | 9-130921 | A | 16 May 1997 | (Family: none) | |
| JP | 2006-43072 | A | 16 February 2006 | (Family: none) | |
| JP | 2004-40975 | A | 05 February 2004 | (Family: none) | |
| JP | 2015-192471 | A | 02 November 2015 | (Family: none) | |

Form PCT/ISA/210 (patent family annex) (January 2015)

39

**REFERENCES CITED IN THE DESCRIPTION**

**Patent documents cited in the description**

- JP 2019103249 A